# EUROPÄISCHE PATENTSCHRIFT

(11) **EP 0 357 885 B1**
(45) Veröffentlichungstag und Bekanntmachung des Hinweises auf die Patenterteilung: **12.05.1993**
(21) Anmeldenummer: 89110108.1
(22) Anmeldetag: 05.06.1989
(51) Int. Cl.: C01B 31/02, B22C 1/02, C10C 1/00, B22C 1/00

(54) **Glanzkohlenstoffbildner**
Precursor of pyrolytic carbon
Précurseur de carbone pyrolytique

(30) Priorität: 08.09.1988 DE 3830463
(43) Veröffentlichungstag der Anmeldung: 14.03.1990
(73) Patentinhaber: RÜTGERSWERKE AKTIENGESELLSCHAFT, 60326 Frankfurt (DE)
(72) Erfinder: Hörmeyer, Heinrich, Dr., D-4300 Essen (DE)

(56) Entgegenhaltungen:
- DE-A- 3 418 663
- GB-A- 823 381
- Transactions American Foundrymen's Society vol. 90, 1982, Seiten 465 - 471; J. BACHMANN ET AL.: "SOME ASPECTS OF GAS EVOLUTION FROM CARBONACEOUS MATERIALS USED IN FOUNDRYMOLDING SAND"

## Beschreibung

Gegenstand der Erfindung ist ein Glanzkohlenstoffbildner für Gießereisande.

Gießereisande bestehen in der Regel aus Sand, einem Binder (z. B. Bentonit) und einem kohlenstoffhaltigen Material, das beim Guß eine reduzierende Atmosphäre in der Form aufbaut und pyrolytischen Kohlenstoff (Glanzkohlenstoff) auf dem Gußstück abscheidet. Auf diese Weise wird verhindert, daß die Oberfläche des Gußeisens oxidiert oder chemische Reaktionen mit den anorganischen Bestandteilen der Form eingeht.

Als Glanzkohlenstoffbildner wird traditionell Kohle, vor allem Anthrazitstaub, eingesetzt. Sie bildet jedoch nur 8 bis 10 % Glanzkohlenstoff und hat häufig einen hohen Schwefelgehalt, der zu Umweltproblemen führt. Kohle wird daher ganz oder teilweise durch andere kohlenwasserstoffhaltige Materialien ersetzt, wie beispielsweise Steinkohlenteerpech (20 bis 25 % Glanzkohlenstoff), Bitumen (ca. 30 % Glanzkohlenstoff), Kohlenwasserstoffharze (50 bis 53 % Glanzkohlenstoff) und Polystyrol (80 bis 85 % Glanzkohlenstoff) (Trans. Am. Foundrymen's Soc., Jg. 90, 465-471).

Steinkohlenteerpech und ähnliche hocharomatische Rückstände werden heute wegen ihres Gehaltes an Benzo(a)pyren kaum noch verwendet. Bitumen und viele Polymere lassen sich nicht gut mahlen und sind daher weniger gut verarbeitbar. Andere Polymere wie z. B. Polystyrol pyrolysieren in einem sehr engen Temperaturbereich (400 °C), was die gleichmäßige Bildung von Glanzkohlenstoff während des Gießvorgangs verhindert. Außerdem sind diese Produkte für diesen Zweck zu teuer. Aus diesem Grund werden in der Praxis häufig Mischungen von Polymeren und billigeren Kohlenwasserstoffen wie Steinkohlenteerpech und Bitumen verwendet. Diese Mischungen enthalten aber auch beträchtliche Mengen Benzo(a)pyren oder sind ebenfalls schlecht mahlbar.

Es bestand daher die Aufgabe, einen preiswerten Glanzkohlenstoffbildner zu entwickeln, der sich gut verarbeiten läßt, eine ausreichende Menge an Glanzkohlenstoff bildet und toxikologisch unbedenklich ist.

Die Aufgabe wird erfindungsgemäß durch einen Glanzkohlenstoffbildner gelöst, der im wesentlichen aus einem Rückstand der Phenolsynthese besteht mit einem Erweichungspunkt (Kraemer-Sarnow) im Bereich von 80 bis 110 °C, weniger als 0,5 Gew.-% Schwefel, weniger als 220 ppm Phenolen, weniger als 50 ppm Benzo(a)pyren und etwa 60 Gew.-% flüchtigen Bestandteilen, und der im Bereich von etwa 200 bis 800 °C gleichmäßig pyrolysiert und dabei 30 bis 40 Gew.-% Glanzkohlenstoff bildet.

Dieser Glanzkohlenstoffbildner kann allein oder in Verbindung mit anderen bekannten, wie beispielsweise Anthrazitstaub, verwendet werden. Er ist sprödbrüchig, und läßt sich daher gut granulieren und mahlen. Aufgrund seines hohen Erweichungspunktes läßt er sich ohne Verbackungen lagern und pneumatisch fördern.

Phenolsyntheserückstände z. B. aus dem Hock-Verfahren enthalten noch erhebliche Mengen an Phenolen und niedrigsiedenden Bestandteilen, die aus dem Rückstand destillativ entfernt werden müssen. Dabei bereitet vor allem die Abtrennung der höher siedenden Phenole, wie beispielsweise der Cumylphenole, Schwierigkeiten. Wegen ihrer hohen Siedelage und der thermischen Instabilität der Inhaltstoffe der Rückstände kommt es bei der Destillation zu starken Kohlenstoffablagerungen im Destillationsrückstand. Es wurde nun gefunden, daß diese Kohlenstoffablagerung bei Rückständen aus der Hock-Synthese verhindert werden kann, wenn 100 Gew.-Teile des Rückstandes nach destillativer Abtrennung von Phenol, Acetophenon und deren Siedebegleiter mit mindestens 20 Gew.-Teilen eines im Bereich von 270 °C bis 370 °C siedenden aromatischen Öls gemischt werden, und dieses Gemisch bei Temperaturen zwischen 320 und 360 °C unter einem Druck von mindestens 300 mbar 5 bis 24 Stunden thermisch behandelt wird. Dabei zersetzen sich die Cumylphenole und chemisch verwandte Verbindungen zu überwiegend Einringphenolen und aromatischen C₆- bis C₉-Kohlenwasserstoffen, ohne daß es zu Kohlenstoffablagerungen kommt. Die Spaltprodukte destillieren aufgrund ihres niedrigen Siedepunktes mit der Hauptmenge des zugesetzten aromatischen Öles ab und können aus diesem destillativ zurückgewonnen werden. Es entsteht ein Rückstand mit einem Erweichungspunkt von etwa 100 °C (Kraemer-Sarnow) und weniger als 200 ppm wasserdampfflüchtiger Phenole.

Die Erfindung wird in dem nachstehenden Beispiel näher erläutert:

### Beispiel

Aus 50 Gew.-Teilen eines Rückstandes aus der Hock-Synthese werden unter Vakuum 18 Gew.-Teile eines Gemisches aus Acetophenon und Phenol abdestilliert. Der Destillationsrückstand wird mit 12 Gew.-Teilen eines Steamcrackerrückstandsöles mit einem Siedebereich von 295 bis 365 °C verdünnt und bei einem Druck von 800 mbar thermisch behandelt. Dabei wird die Temperatur innerhalb von 18 Stunden von 320 auf 355 °C erhöht. Es fallen 10 Gew.-Teile Destillat, 1 Gew.-Teil Gas und 33 Gew.-Teile eines pechartigen Rückstandes an, der unter Zusatz von 3 Gew.-% Wasser granuliert und gemahlen wird. Er hat einen Erweichungspunkt von 103 °C (Kraemer-Sarnow), weniger als 10 ppm Benzo(a)pyren, 0,2 % Schwefel und 61 % flüchtige Bestandteile und bildet 38 Gew.-% Glanzkohlenstoff. Der Phenolgehalt beträgt 8 ppm. Eine Neubildung während der Pyrolyse konnte nicht festgestellt werden.

Von diesem Glanzkohlenstoffbildner wird 1 Gew.-% einem üblichen Gießereiformsand mit Bentonit als Bindemittel zugemischt. Die daraus hergestellten Formen liefern Gußstücke mit fehlerfreien Oberflächen.

## Patentansprüche

1. Glanzkohlenstoffbildner für Gießereisande, **dadurch gekennzeichnet,** daß er im wesentlichen aus einem Rückstand der Phenolsynthese besteht mit einem Erweichungspunkt (Kraemer-Sarnow) im Bereich von 80 bis 110 °C, weniger als 0,5 Gew.-% Schwefel, weniger als 200 ppm Phenolen, weniger als 50 ppm Benzo(a)pyren und etwa 60 Gew.-% flüchtigen Bestandteilen, und daß er im Bereich von etwa 200 bis 800 °C gleichmäßig pyrolysiert und dabei 30 bis 40 Gew.-% Glanzkohlenstoff bildet.

2. Glanzkohlenstoffbildner nach Anspruch 1, **dadurch gekennzeichnet,** daß er durch folgende Verfahrensschritte herstellbar ist:
a) Abdestillieren des in dem bei der Hoch-Synthese anfallenden Synthesephenolrückstand enthaltenen Acetophenons, Phenols und deren Siedebegleiter,
b) Mischen von 100 Gew.-Teilen des Destillationsrückstandes aus a) mit mindestens 20 Gew.-Teilen eines im Bereich von 270 °C bis 370 °C siedenden aromatischen Öls,
c) Thermische Behandlung des Gemisches aus b) bei Temperaturen zwischen 320 °C und 360 °C unter einem Druck von mindestens 300 mbar über 5 bis 24 Stunden und Abdestillieren der Spaltprodukte mit einem Teil des zugesetzten Öls und
d) Granulieren und Mahlen des Rückstandes aus c).

## Claims

1. A lustrous carbon precursor for moulding sands, characterized in that it essentially comprises a residue of phenol synthesis with a softening point (Kraemer-Sarnow) in the range of from 80 to 110°C, less than 0.5% by weight of sulphur, less than 200 ppm of phenols, less than 50 ppm of benzo(a)pyrene and approximately 60% by weight of volatile constituents, and it pyrolyses uniformly in the range of from approximately 200 to 800°C and forms from 30 to 40% by weight of lustrous carbon.

2. A lustrous carbon precursor according to Claim 1, characterized in that it can be prepared by the following steps:
a) distilling off the acetophenone, phenol and the boiling attendants thereof contained in the phenol synthesis residue produced during Hock synthesis;
b) mixing 100 parts by weight of the distillation residue from a) with at least 20 parts by weight of an aromatic oil boiling in the range of from 270°C to 370°C;
c) thermally treating the mixture from b) at temperatures of between 320°C and 360°C at a pressure of at least 300 mbar for between 5 and 24 hours and distilling off the cleavage products with part of the added oil, and
d) granulating and crushing the residue from c).

## Revendications

1. Précurseur de carbone pyrolytique pour sables de fonderie, caractérisé en ce qu'il consiste essentiellement en un résidu de la synthèse du phénol avec un point de ramollissement (Kraemer-Sarnow) dans la plage de 80 à 110°C, moins de 0,5% en poids de soufre, moins de 200 ppm de phénols moins de 50 ppm de benzo(a)pyrène et environ 60% en poids de constituants volatils et qu'il pyrolyse régulièrement dans le domaine d'environ 200 à 800°C et forme ainsi 30 à 40% en poids de carbone pyrolytique.

2. Précurseur de carbone pyrolytique selon la revendication 1, caractérisé en ce qu'il peut être préparé selon les étapes opératoires suivantes :
a) élimination par distillation de l'acétophénone, du phénol et de leurs produits d'accompagnement d'ébullition contenus dans le résidu de la synthèse du phénol obtenu au cours de la synthèse-Hock,
b) mélange de 100 parties en poids du résidu de distillation provenant de a) avec au moins 20 parties en poids d'une huile aromatique bouillant dans l'intervalle de 270°C à 370°C,
c) traitement thermique du mélange provenant de b) à des températures entre 320°C et 360°C, sous une pression d'au moins 300 mbars pendant 5 à 24 heures et séparation par distillation des produits de scission avec une partie de l'huile ajoutée et
d) granulation et broyage du résidu provenant de c).
